# EUROPEAN PATENT APPLICATION

(11) **EP 2 878 346 A1**
(43) Date of publication of application: **03.06.2015**
(21) Application number: 13194634.5
(22) Date of filing: 27.11.2013
(51) Int. Cl.: A63F 13/40, A63F 13/30

(54) **Apparatus and method for online administration**

(71) Applicant: Sony Computer Entertainment Europe Ltd., London W1F 7LP (GB)
(72) Inventor: Stewart, Jason Paul, London, W1F 7LP (GB); O'Connor, Thomas, London, W1F 7LP (GB)
(74) Representative: Ealey, Douglas Ralph

(57) **Abstract**

A method of online administration for a server of a videogame comprises the steps of receiving, from a first client, data defining a user-defined challenge to be associated with a respective level of the videogame, the data indicating a start and end point for the user-defined challenge within the level of the game, and indicating one or more user-selected metrics for evaluating performance of the user-defined challenge; storing the received user-defined challenge in association with the respective level of the videogame; receiving from further clients respective data comprising an identifier of the user-defined challenge and a performance summary comprising one or more respective values for the or each user-selected metric, indicative of a respective further user's performance of the user-defined challenge; storing the received performance summaries in association with the user-defined challenge; and transmitting to a further client a ranking of a respective user's performance in the user-defined challenge based upon a comparison of the respective performance summary against other stored performance summaries.

## Description

The present invention relates to an apparatus and method for online administration.

A number of online game systems maintain global score charts or trophy displays for hosted games, so that players can determine their rankings within the game's community. These score charts or trophy displays provide users with information about their performance in the published game, for example in terms of reaching significant milestones within the published game, or scores credited to users by the published game.

However, there is still scope to improve the responsiveness of games to their user community.

In a first aspect, a method of online administration for a server of a videogame is provided in accordance with claim 1.

In another aspect, a method for an entertainment device to create a user-defined challenge within an existing game level is provided in accordance with claim 9.

In another aspect, a server for administering a videogame is provided in accordance with claim 13.

In another aspect, an entertainment device for creating a user-defined challenge within an existing game level is provided in accordance with claim 15.

Further respective aspects and features of the invention are defined in the appended claims.

Embodiments of the present invention will now be described by way of example with reference to the accompanying drawings, in which:
- Figure 1 is a schematic diagram of an entertainment device in accordance with an embodiment of the present invention.
- Figure 2 is a schematic diagram of a game server and client entertainment devices in accordance with an embodiment of the present invention.
- Figure 3 is a flow diagram of a method of creating and playing a user-defined challenge within an existing game level.

An apparatus and method for online administration are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Suitable examples of a game game console, or entertainment device, are the Sony® Playstation 3®, or equally the Sony® Playstation 4®, and such entertainment devices can connect to appropriate online game servers via the internet.

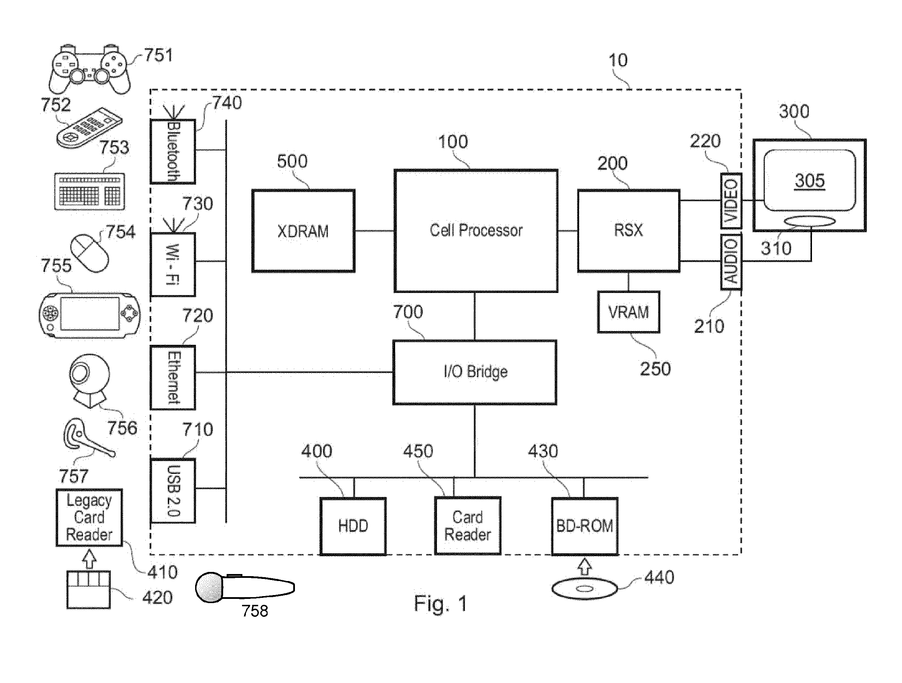

Figure 1 schematically illustrates the overall system architecture of the Sony® Playstation 3® entertainment device. A system unit 10 is provided, with various peripheral devices connectable to the system unit.

The system unit 10 comprises: a Cell processor 100; a Rambus® dynamic random access memory (XDRAM) unit 500; a Reality Synthesiser graphics unit 200 with a dedicated video random access memory (VRAM) unit 250; and an I/O bridge 700.

The system unit 10 also comprises a Blu Ray® Disk BD-ROM® optical disk reader 430 for reading from a disk 440 and a removable slot-in hard disk drive (HDD) 400, accessible through the I/O bridge 700. Optionally the system unit also comprises a memory card reader 450 for reading compact flash memory cards, Memory Stick® memory cards and the like, which is similarly accessible through the I/O bridge 700.

The I/O bridge 700 also connects to four Universal Serial Bus (USB) 2.0 ports 710; a gigabit Ethernet port 720; an IEEE 802.11b/g wireless network (Wi-Fi) port 730; and a Bluetooth® wireless link port 740 capable of supporting up to seven Bluetooth connections.

In operation the I/O bridge 700 handles all wireless, USB and Ethernet data, including data from one or more game controllers 751. For example when a user is playing a game, the I/O bridge 700 receives data from the game controller 751 via a Bluetooth link and directs it to the Cell processor 100, which updates the current state of the game accordingly.

The wireless, USB and Ethernet ports also provide connectivity for other peripheral devices in addition to game controllers 751, such as: a remote control 752; a keyboard 753; a mouse 754; a portable entertainment device 755 such as a Sony Playstation Portable® entertainment device; a video camera such as an EyeToy® video camera 756; and a microphone headset 757. Such peripheral devices may therefore in principle be connected to the system unit 10 wirelessly; for example the portable entertainment device 755 may communicate via a Wi-Fi ad-hoc connection, whilst the microphone headset 757 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 410 may be connected to the system unit via a USB port 710, enabling the reading of memory cards 420 of the kind used by the Playstation® or Playstation 2® devices.

In the present embodiment, the game controller 751 is operable to communicate wirelessly with the system unit 10 via the Bluetooth link. However, the game controller 751 can instead be connected to a USB port, thereby also providing power by which to charge the battery of the game controller 751. In addition to one or more analog joysticks and conventional control buttons, the game controller is sensitive to motion in 6 degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the portable entertainment device 755 or the Playstation Move (RTM) 758 may be used as a controller. In the case of the portable entertainment device, additional game or control information (for example, control instructions or number of lives) may be provided on the screen of the device. In the case of the Playstation Move, control information may be provided both by internal motion sensors and by video monitoring of the light on the Playstation Move device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 752 is also operable to communicate wirelessly with the system unit 10 via a Bluetooth link. The remote control 752 comprises controls suitable for the operation of the Blu Ray Disk BD-ROM reader 430 and for the navigation of disk content.

The Blu Ray Disk BD-ROM reader 430 is operable to read CD-ROMs compatible with the Playstation and PlayStation 2 devices, in addition to conventional pre-recorded and recordable CDs, and so-called Super Audio CDs. The reader 430 is also operable to read DVD-ROMs compatible with the Playstation 2 and PlayStation 3 devices, in addition to conventional pre-recorded and recordable DVDs. The reader 430 is further operable to read BD-ROMs compatible with the Playstation 3 device, as well as conventional pre-recorded and recordable Blu-Ray Disks.

The system unit 10 is operable to supply audio and video, either generated or decoded by the Playstation 3 device via the Reality Synthesiser graphics unit 200, through audio and video connectors to a display and sound output device 300 such as a monitor or television set having a display 305 and one or more loudspeakers 310. The audio connectors 210 may include conventional analogue and digital outputs whilst the video connectors 220 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 100. The Playstation 3 device's operating system supports Dolby® 5.1 surround sound, Dolby® Theatre Surround (DTS), and the decoding of 7.1 surround sound from Blu-Ray® disks.

In the present embodiment, the video camera 756 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 10. The camera LED indicator is arranged to illuminate in response to appropriate control data from the system unit 10, for example to signify adverse lighting conditions. Embodiments of the video camera 756 may variously connect to the system unit 10 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 10, an appropriate piece of software such as a device driver should be provided. Device driver technology is well-known and will not be described in detail here, except to say that the skilled man will be aware that a device driver or similar software interface may be required in the present embodiment described.

Software instructions implemented by the Cell processor 100 and/or the RSX 200 may be supplied at manufacture and stored on the HDD 400, and/or may be supplied on a data carrier or storage medium such as an optical disk or solid state memory, or via a transmission medium such as a wired or wireless network or internet connection, or via combinations of these.

The software supplied at manufacture comprises system firmware and the Playstation 3 device's operating system (OS). In operation, the OS provides a user interface enabling a user to select from a variety of functions, including playing a game, listening to music, viewing photographs, or viewing a video. The interface takes the form of a so-called cross media-bar (XMB), with categories of function arranged horizontally. The user navigates by moving through the function icons (representing the functions) horizontally using the game controller 751, remote control 752 or other suitable control device so as to highlight a desired function icon, at which point options pertaining to that function appear as a vertically scrollable list of option icons centred on that function icon, which may be navigated in analogous fashion. However, if a game, audio or movie disk 440 is inserted into the BD-ROM optical disk reader 430, the Playstation 3 device may select appropriate options automatically (for example, by commencing the game), or may provide relevant options (for example, to select between playing an audio disk or compressing its content to the HDD 400).

In addition, the OS provides an on-line capability, including a web browser, an interface with an on-line store from which additional game content, demonstration games (demos) and other media may be downloaded, and a friends management capability, providing on-line communication with other Playstation 3 device users nominated by the user of the current device; for example, by text, audio or video depending on the peripheral devices available. The on-line capability also provides for on-line communication, content download and content purchase during play of a suitably configured game, and for updating the firmware and OS of the Playstation 3 device itself. It will be appreciated that the term "on-line" does not imply the physical presence of wires, as the term can also apply to wireless connections of various types.

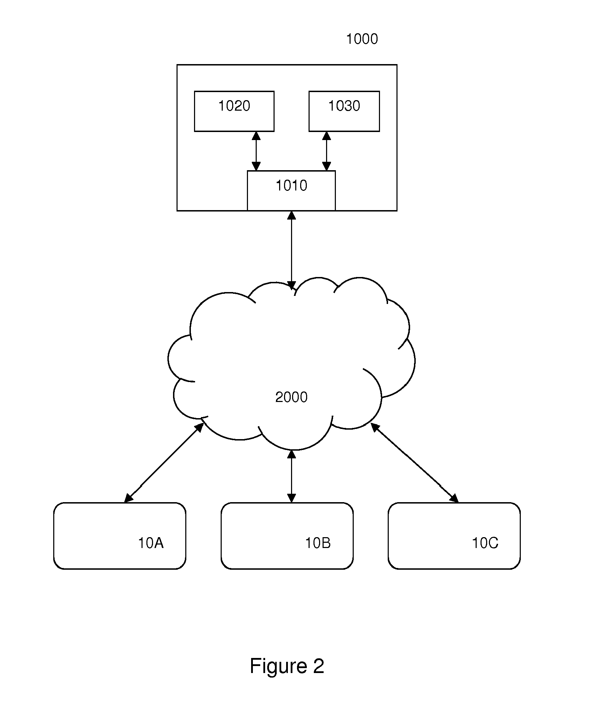

Referring to Figure 2, the game server 1000 that performs online administration of the game is typically a standard server computer, adapted to implement the method of online administration disclosed herein by software instructions held on a non-transitory computer program product such as a hard disk, optical disk, flash memory or ROM.

A plurality of entertainment devices (10A, B, C), operating as clients, connect to the server 1000 via a network (2000) such as the internet.

In operation, the entertainment devices comprise client copies of the game held on a non-transitory computer program product such as a hard disk, optical disk, flash memory or ROM.

When the game is run on the client entertainment devices, typically a view of a virtual game world is rendered and displayed on a screen connected to the entertainment device. This game world usually takes one of two forms; either an environment that is presented to the user playing the game as a single environment, but which is in fact a series of partial environments that are loaded as required as a background activity; or a plurality of distinct and separately accessed environments that are presented to the user as such.

In either case, these environments are referred to as 'levels' herein.

Typically in an on-line game, the client devices run using local copies of a level (whether locally pre-stored or downloaded from the server), and upload status data about gameplay to the server. The nature of the status data will vary with the type of game. For example for multiplayer shooting games, the status data is rapidly updated in near real time. Meanwhile for other games it may be more appropriate to upload status data once a level is complete, or when key points (locations or events) occur in the level. Some or all of this status data can then be processed and/or shared by the server with other clients, as needed.

A specific example of a game comprising levels is Little Big Planet ®. Whilst Little Big Planet ® will be used herein as an example for the purposes of understanding, it will be appreciated that it is a non-limiting example.

In this game, a user is able to select among a plurality of distinct and separately accessed levels. Access to some levels may need to be unlocked by progressing through a scripted story, whilst other levels may be freely accessible at any time, and may have been created either by the game's developers, or by other users employing an available level-editing facility.

Within a level in Little Big Planet ®, users are able to manipulate an in-game character in order to fulfil one or more objectives of the game. At key points in a level (for example at so-called check points, or when the level is completed, or when the in-game character dies), status data is uploaded to the server. In this example, the server then returns a ranking of the user's performance, based upon a comparison of at least some of the status data with that previously received from other players, which is then displayed to the user.

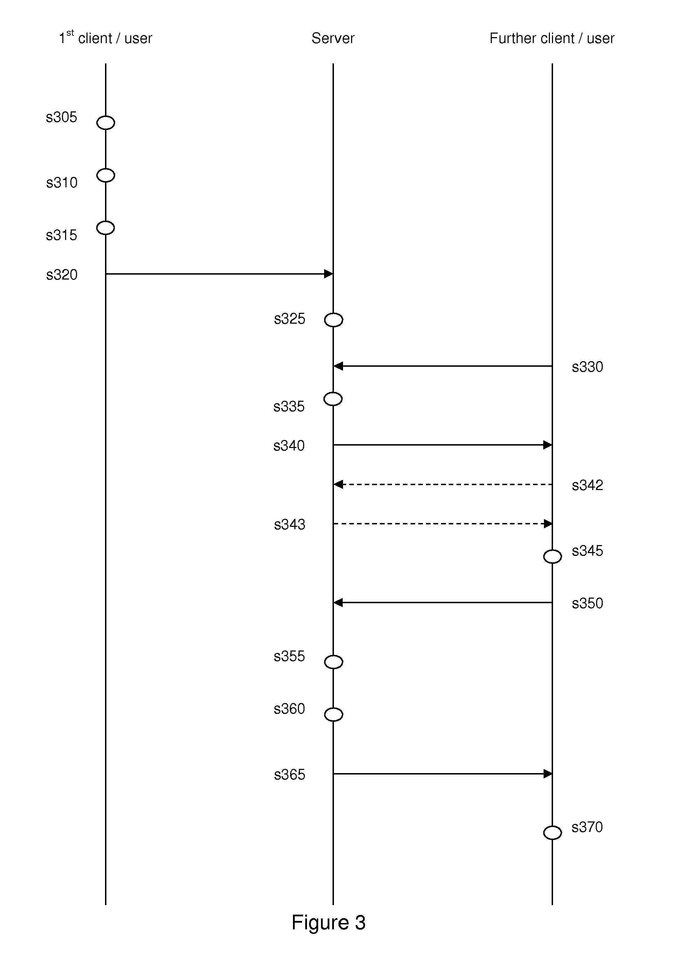

Referring now also to Figure 3, in an embodiment of the present invention, the principle of user-created content is applied to existing levels in a game, by enabling the creation of a so-called meta-game within any existing level (although of course it may be at a designer's discretion to prevent adding meta-games to a particular level if desired). The level itself may be one created by the game developer or by a user.

Hereafter, the meta-game is referred to as a 'challenge'.

In an embodiment of the present invention, when a first user selects a particular level to play, then at step s305 they are given the opportunity to create a challenge. This opportunity may be provided during a level-loading dialogue process, or when the user's in-game character reaches a check point, or at any time in the level, depending on designer preference. Again, the user interface (UI) for creating a challenge may take the form of an on-screen icon, either continuously visible or at key points, or by pressing of a particular button, either at any time or at key points. Again this may depend on designer preference.

Once the UI has been accessed as appropriate to indicate a wish to create a challenge, the location at which this occurred is taken to be the start point of the challenge. Alternatively, the closest key point may be taken to be the start point of the challenge, for example at the nearest in-level checkpoint.

Then at step s310, the first user plays the game in the manner they wish, typically exemplifying the behaviour they want to see emulated in their challenge. Hence for example they may try to be very quick, or to collect a large number of objects, or perform some other action of significance. These behaviours and their measurement are discussed in more detail later.

Then, at a subsequent point in the level, at step s315 the first user accesses the UI again to signify that the challenge is complete. Again this may be at any point in the level, or may be limited to key points such as checkpoints.

It will be appreciated that either of the start and end points for a user challenge may coincide with the start and ends points of the level itself.

Optionally the first user is then presented at this point with the chance to discard the challenge (for example if they did not perform as well as they wished, or have simply changed their mind). If they do not discard the challenge, then they are given the option to select one or possibly more of a plurality of metrics that have been automatically recorded or calculated by the entertainment device during the period of the challenge. The first user will then typically select one or more metrics relevant to the nature of the challenge they wanted to set.

Example metrics may include, but are not limited to:
i. a total score, based on the conventional scoring scheme of the game, accumulated during the challenge;
ii. a total number of objects collected during the challenge;
iii. a particular object acquired, typically through play within the game world (such as a particular jewel, for example), or optionally via an in-game interface (such as obtaining a particular power-up via an in-game store);
iv. a particular location being reached;
v. a particular action being completed;
vi. an in-game speed, either as a peak speed or an average speed;
vii. a time taken to complete the user-defined challenge;
viii. a count of occurrences of a selected in-game action, such as jumping or shooting;
ix. a measurement associated with a particular in-game action, such as height or distance; and
x. a count of enemies defeated.

Associated with these metrics are appropriate evaluation criteria such as 'highest', 'lowest', 'true', 'false', or a above/below a specified number, so that a first user may for example set a challenge to achieve the highest score, or the lowest time, or that fewer than an certain number of shots are fired, or that more than a certain number of objects are collected; similarly challenges may include reaching a location (set as true) or avoiding a hazardous location (set as false).

Optionally a UI can be provided that allows the user to set multiple targets of increasing difficulty using these metrics, for example corresponding to 'bronze', 'silver' and 'gold' versions of the challenge.

Other metrics will be apparent to the skilled person and may vary depending on the type of game. For example, other metrics may include retaining the highest number of health points in a challenge, or winning the most in-game currency (where this is different to the score).

The first user may then select a name for their challenge, and complete the challenge creation process.

It will be appreciated that whilst the above definitions may be input after running through the challenge (at step s315), they may alternatively be input before running the challenge (i.e. at step s305). However this has the disadvantage that the user may not be happy with the subsequent run through, making the input process wasteful, or may prefer to choose their metric in response to their own perceived performance after completion.

In any event, once the challenge has been defined by the user, then at step s320 the entertainment device (hereafter the first client, being the client device of the first user) uploads to the server data defining the user-defined challenge for association by the server with that particular level of the videogame. The data indicates the start and end point for the user-defined challenge within the level of the game, and indicates the one or more user-selected metrics for evaluating performance of the user-defined challenge, as described above.

The data typically also includes the first user's own on-line identification (player ID) and also their chosen name for the challenge.

Hence also the server receives via network communication means 1010, from the from the first client, the uploaded data defining the user-defined challenge to be associated with the respective level of the videogame, with that data indicating the start and end point for the user-defined challenge within the level of the game, and indicating one or more user-selected metrics for evaluating performance of the user-defined challenge.

Again, the data will typically also include the first user's own on-line identification (player ID) and also their chosen name for the challenge.

If the start or end point coincides the start or end of the level, then optionally this can be indicated by omitting the start or end point as applicable, or otherwise formatting the data to indicate this case.

Then at step s 325, the server stores the user-defined challenge in storage means 1020, associating it with the relevant level.

Using the above method, a user-created challenge for any level of the game can be added to the game server.

Subsequently, other users of the game server (and indeed the first user), can then select to attempt the challenge.

In an embodiment of the present invention, any user can select to attempt the challenge. However, the number of challenges created by users of a popular game may be expected to be very large, making the notification of challenges in the game potentially intrusive, and the selection of a particular challenge arduous.

Hence in an embodiment of the present invention, challenges may be rated by users after completion, and users may filter the challenges offered to them by a minimum rating, in order to only see the best. In this case, in order to allow challenges to be rated at all, newly created challenges may be allowed to bypass this filter for a predetermined time.

Other techniques for limiting the number of challenges, and/or making the challenges offered to a user more relevant, include geographically filtering challenges, either according to the location of the creator, or the locations of the majority of users who have taken the challenge. The geographical range can be contracted (e.g. continent > country > county >local radius) as more challenges are created, so that never more than a certain predetermined number of geographically relevant challenges meet this geographical range criteria and are offered to the user. Again, newly created challenges may bypass this filter for a limited period, and similarly challenges that a user has previously played (but would no longer meet the geographical range criterion because the number of challenges has increased), may bypass the filter.

Similarly in an embodiment of the present invention, users may filter challenges based the metrics they use - hence if a user feels like doing a speed challenge or time trial, they can select these metrics in a preference interface, and then only challenges using these metrics for evaluation purposes are presented to the user.

Finally, challenges may be limited to friends of the user who created the challenge. Friends in this case are users who have been selected and added to a list by the user who created the challenge. The list itself does not need to have been compiled specifically for the challenge. Examples of suitable lists include friends lists created via the operating system of the entertainment device (such as PlayStation Network friends), lists created via the game itself (for example by tagging users as friends when they are encountered in a multiplayer mode), and lists accessible (with user permission) from other sources, such as Facebook ® friends and Twitter ® followers. In these latter cases, correlating users of the game with third party user names (Facebook ® and Twitter ® names), not specifically registered to a server accessible by either the game or the entertainment device OS existing outside a network, requires additional information. This information may be accessible for example where these users access Facebook ® or Twitter ® (or any other social platform) via an application on the entertainment device. Permission to allow such correlation to occur can be sought in advance.

In this way, users can set challenges for their friends, and friends can compete against each other when completing a challenge.

It will be appreciated that any suitable combination of filtering and listing is envisaged.

Hence for example where a user only has a few friends, or only a small number of their friends are registered as having a copy of the same game, optionally a friend-of-a-friend combined list may be used.

Alternatively or in addition, their friends list may be combined with a geographical filter of the type described previously.

Similarly where a user has a large number of friends, then geographical or metric/goal based filtering as described previously may help to limit the number of challenges offered.

In any event, once a first user has created a user-defined challenge, some further users will be able to access the challenge.

Hence in an embodiment of the present invention, at step s330, when a further user selects a level, their entertainment device, acting as a further client, transmits to the server a level notification message comprising an identifier of a level selected for play by the further user. At step s335, the server checks for stored user-defined challenges associated with that level, and if one or more such challenges exist, optionally performs any filtering of those challenges as described previously. Then, at step 340, the server transmits to the further client respective challenge messages for each user-defined challenge that the further user can access, each message comprising the identity of a user-defined challenge, a start and end point for the user-defined challenge within the level of the game, and one or more user-selected metrics for evaluating performance of the user-defined challenge. Alternatively, the challenge messages could be combined within one message.

Again the UI for accessing the challenge is at a designer's discretion, and may for example involve presenting the option during a level loading phase, or at or near the start point of the challenge within the level, or by accessing an icon, menu item or special button.

Having received a challenge message from the server, the further client displays to the further user a summary of the or each challenge, including the or each metric against which performance in a respective challenge is to be judged. Typically the summary also includes the challenge name, and the player ID of the first user who created the challenge.

Alternatively, the challenge message may only contain the name of the challenge and the player ID of the creator, and the additional details of the challenge are only transmitted to the further client if the further user chooses the challenge.

In any event, once the further user chooses a challenge, and all the data required to define the challenge has been downloaded from the server, then at step s345 the entertainment device positions the in-game character of the further user at the challenge start point, and typically a count-down is given to begin. The further user then then plays the game in the manner they wish, typically exemplifying the behaviour needed to perform well against the user-selected metrics in the challenge.

Once the challenge is completed, then at step s350 the entertainment device (the further client) of the further user uploads data comprising an identifier of the user-defined challenge, and a performance summary for the further user's attempt, comprising as appropriate one or more respective values for the or each user-selected metric used by the user-defined challenge to evaluate performance, as described previously. Hence for example a performance summary may include a total score, an elapsed time, or a count of objects collected, etc.

The data typically also includes the further user's player ID, and may also include details such as the time at which the challenge was completed.

Hence also, the server receives these performance summaries from further clients, and at step s355 it stores them in the storage means 1020 in association with the user-defined challenge.

In an embodiment of the present invention, when the server receives a performance summary of a further user from their further client, at step s360 a comparator processing means 1030 of the server (such as a processor of the server operating under suitable software instruction) then performs a comparison of the respective performance summary against other stored performance summaries, to obtain a ranking of the further user. At step s365 the server then transmits the ranking back to the further client for display at step s370 to the further user.

The transmitted ranking may simply be a rank number, or may for example comprise a subset of N player IDs and metric values for those users ranked immediately above and below the further user, where N is a number selected by a designer of the game, such as 10.

It will also be appreciated that when the first user performs their first run-through of the challenge when defining it, a first performance summary is also created and uploaded to the server, and the first user is by default initially ranked #1.

The above techniques thus provide a user-defined challenge accessible by further users, who receive feedback about their performance after completion of their challenge attempt.

However, it is possible to also provide more immediate feedback during the challenge.

Hence, in an embodiment of the present invention, entertainment devices record the actions of users during the challenge. Typically this takes the form of recording the position of an in-game character within the virtual environment of the level, this position being a consequence of the user's actions in running, jumping, fighting, interacting with objects and so forth.

Optionally other information can be recorded, such as the state of the in-game character (e.g. transitions from running to jumping etc at certain positions), as well as the state of the game in response (e.g. when objects are collected, or enemies are killed).

The position of the in-game character may be recorded on a frame-by frame basis in 2 or three dimensions as required. To reduce bandwidth, optionally only those values that change between frames are updated (hence for example if a character is running along a flat surface, only the x-dimension value is likely to change). The values may be recorded as absolutes or differentials.

Hence for example, a recording may take the form:
Frame 1: x,y,z = 1000, 1000, 1000. Record: 1000, 1000, 1000.
Frame 2: x,y,z = 1001, 1000, 1000. Record: 1001, - , -
Frame 3: x,y,z = 1002, 1000, 1000. Record: 1002, - , -
Frame 4: x,y,z = 1002, 1005, 1000. Record: - , 1005 , -
Frame 5: x,y,z = 1002, 1005, 1009. Record: - , - , 1009

Subsequently, after the challenge is completed, the entertainment device (acting as a client) uploads a performance log comprising a recording of a user's in-game actions performed during an attempt at the user-defined challenge.

The performance log can be part of the performance summary mentioned previously, or a separate data set.

Hence also the server receives from clients a respective performance log comprising a recording of a user's in-game actions performed during an attempt at the user-defined challenge. As noted above the recording can take the form of just the position of an in game character (or of a locus / point of view, for first-person perspective games), or may also include character states and relevant changes to the state of the virtual world.

The server then stores the received performance logs in association with the user-defined challenge.

Subsequently, when at step s342 the server receives from a particular one of the clients a challenge notification message comprising an identifier of the user-defined challenge and indicating that a particular user has selected to attempt the user-defined challenge, the server at step s343 can use the ranking of that particular user (based upon their performance summary as described previously) to select the performance log of a user of higher rank (typically the user immediately above them in ranking), and to transmit that performance log back to the particular one of the clients.

This client can then use the performance log to render a ghost version of the performance of the other user of higher rank during the particular user's attempt on the challenge. In this way, the particular user gets to compete against a well-matched competitor.

If they beat the metric of the user of higher rank, then when their performance summary is uploaded to the server, the rankings for the user-generated challenge change, and he next time the particular user plays the user-generated challenge, they will receive a different performance log from another, better player.

Clearly, there are three exceptions to this approach. The first is that the person ranked #1 will not have a user of higher rank to compete against. However, in this case for example they may receive the performance log of the #2 ranked player.

The second is the first user, when they create the user-defined challenge. Clearly however there will be no expectation of a ghost challenger at this point and so none needs to be provided.

The third is when any further user chooses to attempt the user-defined challenge for the first time, because they will not have a ranking of their own from which identify a user of higher rank.

In this case, in an embodiment of the present invention, the performance log of the first user, who created the challenge, is selected as a default. This has the social benefit of giving everyone who participates in the challenge the chance to play 'with' the creator of the challenge at least once.

Hence for this embodiment, the first client transmits (and the server receives) a performance log comprising a recording of a the first user's in-game actions performed during the user-defined challenge, submitted upon completing the user-defined challenge (i.e. when first defining it, or when they subsequently replay the challenge and improve their own performance);

The server then stores the received performance log in association with the user-defined challenge.

Then, when the server receives for the first time from a further client a notification message comprising an identifier of the user-defined challenge and indicating that a particular user has selected to attempt the user-defined challenge, the server transmits to that further client the performance log of the first user, enabling the first user to be rendered by that further clients as a competitor during the challenge.

Alternatively, users may have associated with them a meta-score, based upon their rankings or performance in other challenges. For example, they may have indicators of average speed in challenges ranked by a speed metric, or average percentage of objects collected in challenges ranked by an object metric, and so-on. In this case, the new further user's meta-score may be compared with the meta-scores of users ranked in this user-defined challenge to find their effective rank among these users, and then the performance log of a user of higher meta-score rank is chosen. After the new further user has completed the user-defined challenge once, they can be ranked like any other user who has attempted the user-defined challenge and receive appropriate performance logs to play against, as described previously.

The client devices can render the actions of the user as recorded in the performance log in any suitable way; for example as a so-called ghost, typically a semi-transparent version of the in-game character (or a variant thereof to reduce confusion) that either partially or fully does not interact with the virtual environment and hence acts purely as a visible indicator of the recorded user's progress through the level.

In addition to being a competitor, the ghost can also beneficially act as a guide to what to do in the challenge; in this case, the previously described use of the creator's ghost the first time a player attempts a challenge is of particular benefit.

As noted previously the performance log can include additional data relating to the state of the in-game character, so that, for example, if the character transformed due to use of a power-up, this can be accurately reflected in the ghost version. Similarly additional data relating to the state of the game world can be included, so that for example ghost versions of object collection animations can be shown to indicate whether the ghost did or did not collect an object, or perform some other action in the game world that is relevant to the particular user-defined challenge.

In this way, users can set challenges for their friends, and friends can compete against each other when completing a challenge, and furthermore they can do so directly against recordings of each other's actions in the challenge that are selected to provide a well-matched competitor for the user's current ability within the challenge.

As users repeat the challenge and improve, their performance summaries and performance logs can be updated. Hence where noted above that the server stores performance summaries and logs, this storage can be made conditional upon the values of the relevant metric(s) in the performance summary of a user being better than in the currently stored performance summary of that user.

In order to decide who is the best player of a user-defined challenge, optionally the challenge has a finite life, at the end of which the #1 ranked user is declared the winner. The lifetime of the challenge may be set by the first user, for example from among a range of options such as today, this weekend, a week or a month.

Referring back to the issue of filtering challenges, it will be appreciated that filtration could therefore also be applied so that challenges with the least remaining time are prioritised or positioned more prominently for the attention of a user.

In addition to the above techniques, variants may be considered.

In a first variant, multiple players share a common instance of a level of the video game. This can be achieved using well known techniques where the current position and state of reach user in-game is relayed to the other players, either on a peer-to-peer basis or more commonly via the game server 1000, so that the users appear to occupy the same level together. Sometimes the purpose of this is purely social, at other times it encourages competitive play, and in other cases it encourages co-operative play, for example by including elements in a level that are only accessible or solvable by two or more players acting together.

In any event, optionally where multiple players occupy a single level of the video game, if one player selects to begin a user-defined challenge then optionally the or each other player in the level is offered the chance to also begin the challenge. If they accept, then the participating users are re-located to a common position (i.e. the start point of the challenge), and commencement of the challenge is synchronised, for example using a countdown timer.

The players can then play the game however they see fit until they reach the end of the user-defined challenge. Each player's performance summary, and optionally performance log, are uploaded as described previously, and rankings are received. Optionally a locally determined winner / loser message is displayed distinguishing the performances of the players sharing the particular instance of the level.

Optionally this approach can over-ride the friends-list filtering discussed previously, so that one friend, choosing to access a user-defined challenge, can play with other users in the level who are not necessarily friends of the first user (the challenge creator). Optionally this facility may be enabled at the choice of the first user when defining the challenge.

Similarly, in principle in an embodiment of the present invention, two-player challenges may be created by two first users acting together. In this case, for example, a first user may specify that the challenge to be created is a two-player challenge, and then nominate the co-first user from a list of players also in the level. The first user plays the game and sets the metrics as before, but now the performance summary and optionally the performance log of the co-first player are also uploaded to the server in a similar manner, so that these can form the basis for rankings and ghosts for the second player in the two-player challenge.

Consequently, when a further user wishes to attempt such a challenge, they will need to nominate or otherwise pair up with another user in the level in order to play.

In a second variant, a user may set a community challenge. In this variant, the values of metrics from performance summaries are combined to reach a group objective, such as collecting M objects within the lifetime of the challenge. The group will typically be the users who are able to see this user-defined challenge. Alternatively the first user can partition friends into two or more sub-groups, so that group competition and group rankings are possible.

Hence, in a summary embodiment of the present invention, a method of online administration for a server (1000) of a videogame comprises in a first step s320, receiving from a first client (10) data defining a user-defined challenge to be associated with a respective level of the videogame, where the data indicates a start and end point for the user-defined challenge within the level of the game, and indicates one or more user-selected metrics for evaluating performance of the user-defined challenge; in a second step s325, storing the received user-defined challenge in association with the respective level of the videogame; in a third step s350, receiving from further clients respective data comprising an identifier of the user-defined challenge and a performance summary comprising one or more respective values for the or each user-selected metric, indicative of a respective further user's performance of the user-defined challenge; in a fourth step s355, storing the received performance summaries in association with the user-defined challenge; and in a fifth step s365, transmitting to a further client a ranking of a respective user's performance in the user-defined challenge based upon a comparison of the respective performance summary against other stored performance summaries.

Hence the server can receive a user-defined challenge from a first user that is associated with an existing level of a game, and other users can then submit performance summaries for their own attempts at the challenge that are then ranked and fed back to them.

In an instance of this summary embodiment, the method comprises the steps of receiving from further clients (for example also at step s350) a respective performance log comprising a recording of in-game actions of a user performed during an attempt at the user-defined challenge; storing (for example also at step s355) the received performance logs in association with the user-defined challenge; and receiving at step s342 from a particular one of the further clients a challenge notification message comprising an identifier of the user-defined challenge and indicating that a particular user has selected to attempt the user-defined challenge; and transmitting at step s343 to the particular one of the further clients the performance log of a user ranked above the particular user, enabling the user ranked above the particular user to be rendered by the particular one of the further clients as a competitor during the challenge.

Hence in addition to just summaries comprising values for metrics, optionally users' actual attempts at the challenge can be recorded and used a ghost competitors for other users who are similarly ranked.

Similarly, in an instance of this summary embodiment, the method comprises the steps of receiving from the first client (for example also at step 320) a performance log comprising a recording of a the first user's in-game actions performed during the user-defined challenge, submitted upon completing the user-defined challenge; storing (for example also at step 325) the received performance log in association with the user-defined challenge; receiving at step s342 for the first time from a further client a notification message comprising an identifier of the user-defined challenge and indicating that a particular user has selected to attempt the user-defined challenge; and transmitting at step s343 to that further client the performance log of the first user, enabling the first user to be rendered by that further clients as a competitor during the challenge.

In this way, optionally any user attempting the challenge for the first time receives the challenge creator's ghost as a competitor.

In an instance of this summary embodiment, the method comprises the steps of receiving (at step s330 or s342) from a particular one of the further clients a level notification message comprising an identifier of a level selected for play by a particular user; and transmitting (at step s340 or s343) to the particular one of the further clients a challenge message comprising the identity of the user-defined challenge, a start and end point for the user-defined challenge within the level of the game, and one or more user-selected metrics for evaluating performance of the user-defined challenge.

This provides an efficient way to distribute challenge data; some data may be transmitted when a user enters the associated level (such as the challenge name, the selected metric(s) and the creator's player ID), and additional data that may require more bandwidth (or may rely on data only received once the level itself has downloaded) - such as start and end points, or a suitable ghost recording may be transmitted once the user has selected a particular challenge. It will be understood that the split of challenge data in this way can vary according to the nature of the game, how challenges are presented to the users, and the number of challenges associated with a level and at the designer's discretion.

In an instance of this summary embodiment, the method may comprise the steps of comparing the particular further user's identity against a list of users selected by the first user (e.g. a friends list); and only transmitting the challenge message if the particular user's identity is on the list.

As noted previously, this list can be based upon a number of sources, and may also include additional users filtered on the basis of geography, and/or also on features such as registered language, registered age, similarity of trophies, owned games or currently mounted games, and so on.

In an instance of this summary embodiment, the user-selected metrics comprise one or more selected from the list consisting of:
i. a total score;
ii. a number of objects collected;
iii. a particular object acquired;
iv. a particular location reached;
v. a particular action completed;
vi. an in-game speed;
vii. a time taken to complete the user-defined challenge;
viii. a count of occurrences of a selected in-game action;
ix. a measurement associated with a particular in-game action; and
x. a count of enemies defeated,
though as noted above, other metrics may be chosen that are suitable to a particular game whilst remaining within the scope of the present invention.

Meanwhile, in a variant instance of this summary embodiment in which two or more clients share access to a multiplayer level of the videogame having associated with it a user-defined challenge, the method comprises the step of (upon receiving from at least one of these clients a challenge notification message comprising an identifier of the user-defined challenge and indicating that a user has selected to attempt the user-defined challenge) transmitting an initialisation message to the two or more clients, the initialisation message comprising instructions for all the two or more clients begin the challenge at the same in-game location and at the same time.

This allows multiplayer local competition within a challenge in addition to the broader friends-based challenge. It will be appreciated that in this case either one or two ghosts may optionally be downloaded, optionally in response to a threshold difference in rank for the participating players.

Similarly, in a variant instance of this summary embodiment relates to community challenges, in which the data defining the user-defined challenge indicates a group metric for evaluating performance of the user-defined challenge, and an end time for participating in the user-defined challenge, the method comprises the steps of defining a plurality of users as a group; combining received performance summaries from participating users to form a group metric value; and transmitting to clients of at least the participating users a message indicating whether the group metric was satisfied by the end time.

Hence friends can group together to achieve collective goals. Optionally this facility may be limited to certain users, for example those who have completed the game or have been given a moderator status by administrators of the game.

Meanwhile, in a summary embodiment of the present invention a method for an entertainment device of creating a user-defined challenge within an existing game level comprises the steps of receiving at step s305 a user input indicating a first user's wish to start a challenge at a point in that level, receiving at step s315 a user input indicating the first user's wish to end the challenge at a point in that level, receiving (at step s305 or s315) a user input identifying one or more metrics upon which performance in the challenge is to be evaluated, and at step s320 uploading to a server data defining the user-defined challenge to be associated with that level of the videogame, the data indicating the start and end point for the user-defined challenge within the level of the game, and indicating the one or more user-selected metrics for evaluating performance of the user-defined challenge.

In an instance of this summary embodiment, the method comprises the steps of recording at step s310 one or more respective values for one or more in-game metrics between the start point and the end point of the user-defined challenge; and at step s320 uploading to the server a performance summary comprising the one or more respective values for the or each user-selected metric, indicative of the first user's performance of the user-defined challenge.

In an instance of this summary embodiment, the method comprises the steps of recording at step s310 in-game actions of the first user performed during the user-defined challenge; and at step s320 uploading to the server a performance log comprising a recording of in-game actions of the first user performed during the user-defined challenge.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these of other networks.

Meanwhile, in a summary embodiment of the present invention a server (1000) for administering a videogame comprises a network communication means (1010) arranged in operation to receive, from a first client, data defining a user-defined challenge to be associated with a respective level of the videogame, the data indicating a start and end point for the user-defined challenge within the level of the game, and indicating one or more user-selected metrics selected by a first user for evaluating performance of the user-defined challenge; and storage means (1020) arranged in operation to store the received user-defined challenge in association with the respective level of the videogame; the network communication means being arranged in operation to receive from a further client respective data comprising an identifier of the user-defined challenge and a performance summary comprising one or more respective values for the or each user-selected metric, indicative of a respective further user's performance of the user-defined challenge; the storage means being arranged in operation to store the received performance summary in association with the user-defined challenge; comparator processing means (1030) arranged in operation to calculate a ranking of the respective further user's performance in the user-defined challenge based upon a comparison of the respective further user's performance summary against other stored performance summaries; and the network communication means being arranged in operation to transmit to the further client the ranking of the respective further user's performance in the user-defined challenge.

In an instance of this summary embodiment, the network communication means is arranged in operation to receive from the first client a performance log comprising a recording of in-game actions of the first user performed during the user-defined challenge; the storage means is arranged in operation to store the received performance log in association with the user-defined challenge; the network communication means is arranged in operation to receiving from a further client a first instance of a notification message comprising an identifier of the user-defined challenge and indicating that a particular user has selected to attempt the user-defined challenge; and the network communication means is arranged in operation to transmit to that further client the performance log of the first user, enabling the first user to be rendered by that further client as a competitor during the challenge.

Finally, in a summary embodiment of the present invention an entertainment device for creating a user-defined challenge within an existing game level comprises user input means (710, 730, 740, 700, 100) arranged in operation to receive a user input indicating a first user's wish to start a challenge at a point in that level; user inputs means arranged in operation to receive a user input indicating the first user's wish to end the challenge at a point in that level; user inputs means arranged in operation to receive a user input identifying one or more metrics upon which performance in the challenge is to be evaluated; and network communication means (720, 700, 100) is arranged in operation to upload to a server data defining the user-defined challenge to be associated with that level of the videogame, the data indicating the start and end point for the user-defined challenge within the level of the game, and indicating the one or more user-selected metrics for evaluating performance of the user-defined challenge.

## Claims

1. A method of online administration for a server of a videogame, comprising the steps of:
receiving, from a first client, data defining a user-defined challenge to be associated with a respective level of the videogame, the data indicating a start and end point for the user-defined challenge within the level of the game, and indicating one or more user-selected metrics for evaluating performance of the user-defined challenge;
storing the received user-defined challenge in association with the respective level of the videogame;
receiving from further clients respective data comprising an identifier of the user-defined challenge and a performance summary comprising one or more respective values for the or each user-selected metric, indicative of a respective further user's performance of the user-defined challenge;
storing the received performance summaries in association with the user-defined challenge; and
transmitting to a further client a ranking of a respective user's performance in the user-defined challenge based upon a comparison of the respective performance summary against other stored performance summaries.

2. A method of online administration according to claim 1, comprising the steps of:
receiving from further clients a respective performance log comprising a recording of in-game actions of a user performed during an attempt at the user-defined challenge;
storing the received performance logs in association with the user-defined challenge; and
receiving from a particular one of the further clients a challenge notification message comprising an identifier of the user-defined challenge and indicating that a particular user has selected to attempt the user-defined challenge; and
transmitting to the particular one of the further clients the performance log of a user ranked above the particular user, enabling the user ranked above the particular user to be rendered by the particular one of the further clients as a competitor during the challenge.

3. A method of online administration according to claim 1, comprising the steps of:
receiving from the first client a performance log comprising a recording of in-game actions of the first user performed during the user-defined challenge, submitted upon completing the user-defined challenge;
storing the received performance log in association with the user-defined challenge;
receiving for the first time from a further client a notification message comprising an identifier of the user-defined challenge and indicating that a particular user has selected to attempt the user-defined challenge; and
transmitting to that further client the performance log of the first user, enabling the first user to be rendered by that further client as a competitor during the challenge.

4. A method of online administration according to any one of the preceding claims, comprising the steps of:
receiving from a particular one of the further clients a level notification message comprising an identifier of a level selected for play by a particular user; and
transmitting to the particular one of the further clients a challenge message comprising the identity of the user-defined challenge, a start and end point for the user-defined challenge within the level of the game, and one or more user-selected metrics for evaluating performance of the user-defined challenge.

5. A method of online administration according to claim 4, comprising the step of:
comparing the particular further user's identity against a list of users selected by the first user; and
only transmitting the challenge message if the particular user's identity is on the list.

6. A method of online administration according to any one of the preceding claims, in which the user-selected metrics comprise one or more selected from the list consisting of:
i. a total score;
ii. a number of objects collected;
iii. a particular object acquired;
iv. a particular location reached;
v. a particular action completed;
vi. an in-game speed;
vii. a time taken to complete the user-defined challenge;
viii. a count of occurrences of a selected in-game action;
ix. a measurement associated with a particular in-game action; and
x. a count of enemies defeated.

7. A method of online administration according to any one of the preceding claims, in which two or more clients share access to a multiplayer level of the videogame having associated with it a user-defined challenge; and in which:
upon receiving from at least one of these clients a challenge notification message comprising an identifier of the user-defined challenge and indicating that a user has selected to attempt the user-defined challenge,
transmitting an initialisation message to the two or more clients, the initialisation message comprising instructions for all the two or more clients begin the challenge at the same in-game location and at the same time.

8. A method of online administration according to any one of the preceding claims, in which
the data defining the user-defined challenge indicates
a group metric for evaluating performance of the user-defined challenge, and
an end time for participating in the user-defined challenge;
and the method comprises the steps of:
defining a plurality of users as a group; and
combining received performance summaries from participating users to form a group metric value; and
transmitting to clients of at least the participating users a message indicating whether the group metric was satisfied by the end time.

9. A method for an entertainment device to create a user-defined challenge within an existing game level, comprising the steps of:
receiving a user input indicating a first user's wish to start a challenge at a point in that level;
receiving a user input indicating the first user's wish to end the challenge at a point in that level;
receiving a user input identifying one or more metrics upon which performance in the challenge is to be evaluated; and
uploading to a server data defining the user-defined challenge to be associated with that level of the videogame, the data indicating the start and end point for the user-defined challenge within the level of the game, and indicating the one or more user-selected metrics for evaluating performance of the user-defined challenge.

10. A method of creating a user-defined challenge according to claim 9, comprising the steps of:
recording one or more respective values for one or more in-game metrics between the start point and the end point of the user-defined challenge; and
uploading to the server a performance summary comprising the one or more respective values for the or each user-selected metric, indicative of the first user's performance of the user-defined challenge.

11. A method of creating a user-defined challenge according to claim 9 or claim 10, comprising the steps of:
recording in-game actions of the first user performed during the user-defined challenge; and
uploading to the server a performance log comprising a recording of in-game actions of the first user performed during the user-defined challenge.

12. A computer program for implementing the steps of any preceding method claim.

13. A server for administering a videogame, the server comprising:
network communication means arranged in operation to receive, from a first client, data defining a user-defined challenge to be associated with a respective level of the videogame, the data indicating a start and end point for the user-defined challenge within the level of the game, and indicating one or more user-selected metrics selected by a first user for evaluating performance of the user-defined challenge;
storage means arranged in operation to store the received user-defined challenge in association with the respective level of the videogame;
the network communication means being arranged in operation to receive from a further client respective data comprising an identifier of the user-defined challenge and a performance summary comprising one or more respective values for the or each user-selected metric, indicative of a respective further user's performance of the user-defined challenge;
the storage means being arranged in operation to store the received performance summary in association with the user-defined challenge;
comparator processing means arranged in operation to calculate a ranking of the respective further user's performance in the user-defined challenge based upon a comparison of the respective further user's performance summary against other stored performance summaries; and
the network communication means being arranged in operation to transmit to the further client the ranking of the respective further user's performance in the user-defined challenge.

14. A server for administering a videogame according to claim 13, in which:
the network communication means is arranged in operation to receive from the first client a performance log comprising a recording of in-game actions of the first user performed during the user-defined challenge;
the storage means is arranged in operation to store the received performance log in association with the user-defined challenge;
the network communication means is arranged in operation to receiving from a further client a first instance of a notification message comprising an identifier of the user-defined challenge and indicating that a particular user has selected to attempt the user-defined challenge; and
the network communication means is arranged in operation to transmit to that further client the performance log of the first user, enabling the first user to be rendered by that further client as a competitor during the challenge.

15. An entertainment device for creating a user-defined challenge within an existing game level, the entertainment device comprising:
user inputs means arranged in operation to receive a user input indicating a first user's wish to start a challenge at a point in that level;
user inputs means arranged in operation to receive a user input indicating the first user's wish to end the challenge at a point in that level;
user inputs means arranged in operation to receive a user input identifying one or more metrics upon which performance in the challenge is to be evaluated; and
network communication means is arranged in operation to upload to a server data defining the user-defined challenge to be associated with that level of the videogame, the data indicating the start and end point for the user-defined challenge within the level of the game, and indicating the one or more user-selected metrics for evaluating performance of the user-defined challenge.
